# EUROPÄISCHE PATENTANMELDUNG

(11) **EP 0 814 271 A1**
(43) Veröffentlichungstag der Anmeldung: **29.12.1997**
(21) Anmeldenummer: 97108501.4
(22) Anmeldetag: 27.05.1997
(51) Int. Cl.: F15B 15/14

(54) **Mehrstufige fluidbetätigte Arbeitszylinderanordnung**

(30) Priorität: 21.06.1996 DE 29610911 U
(71) Anmelder: FESTO AG & Co, 73734 Esslingen (DE)
(72) Erfinder: Stoll, Kurt, Dr., 73732 Esslingen (DE); Köngeter, Herbert, 73262 Reichenbach (DE)
(74) Vertreter: Abel, Martin, Dipl.-Ing.

(57) **Zusammenfassung**

Es wird eine mehrstufige fluidbetätigte Arbeitszylinderanordnung vorgeschlagen, die über eine Primärstufe (3) mit einem Primärkolben (17) und mindestens eine Sekundärstufe (4,4') mit jeweils einem Sekundärkolben (22) verfügt. Die Primärstufe (3) dient zur Erzeugung eines Arbeitshubes einer Abtriebsstange (16). Die Sekundärkolben (22) sind der Abtriebsstange zur Kraftverstärkung zuschaltbar. Hierzu sind die Sekundärkolben (22) von der Abtriebsstange (16) axial verschiebbar durchsetzt. Außerdem verfügt jeder Sekundärkolben (22) über eine Kupplungseinrichtung (25), durch die der betreffende Sekundärkolben (22) unabhängig von der momentanen Axialposition der Abtriebsstange (16) axial unverschieblich lösbar auf der Abtriebsstange (16) festlegbar ist.

## Beschreibung

Die Erfindung betrifft eine mehrstufige fluidbetätigte Arbeitszylinderanordnung, mit einer axial verschiebbaren Abtriebsstange und mehreren zur Übertragung einer Antriebskraft mit der Abtriebsstange zusammenwirkenden fluidbeaufschlagbaren Antriebselementen, wobei eine im wesentlichen für den Arbeitshub der Abtriebsstange verantwortliche Primärstufe mit einem Primärkolben als Antriebselement und mindestens eine eine Kraftverstärkung ermöglichende Sekundärstufe mit einem der Abtriebsstange variabel zuschaltbaren Sekundärkolben als weiteres Antriebselement vorhanden ist.

Eine mehrstufige Arbeitszylinderanordnung dieser Art geht aus der DE 41 08 220 A 1 hervor. Sie wird beispielsweise in der Schweißtechnik bei Punktschweißnwendungen eingesetzt. Die Primärstufe ist nach Art eines doppelt wirkenden Arbeitszylinders aufgebaut und ist für den Arbeitshub der Abtriebsstange verantwortlich, um eine an dieser angeordnete Schweißelektrode in Kontakt mit einem Werkstück zu bringen. Anschließend kann durch zusätzlich Druckbeaufschlagung der ebenfalls an der Abtriebsstange festgelegten Sekundärkolben in den Sekundärstufen eine Verstärkung der auf die Abtriebsstange ausgeübten Antriebskraft herbeigeführt werden, um die mit der Abtriebsstange verbundene Schweißelektrode mit der für den Schweißvorgang erforderlichen Kraft gegen das Werkstück zu drücken. Die spätere Zuschaltung der Sekundärstufen hat hierbei den Vorteil, daß der Aufprall der Abtriebsstange auf dem Werkstück reduziert ist und die eigentliche Betriebskraft zu einem Zeitpunkt aufgebracht werden kann, zu dem der Kontakt mit dem Werkstück bereits vorliegt.

Die mehrstufige Ausgestaltung der Arbeitszylinderanordnung eröffnet somit vielfältige und flexible Einsatzmöglichkeiten. Nachteilig ist jedoch die sich durch die axiale Hintereinanderschaltung der einzelnen Zylinderstufen ergebende große axiale Baulänge.

Es ist daher die Aufgabe der vorliegenden Erfindung, eine Arbeitszylinderanordnung der eingangs genannten Art zu schaffen, die die Verwirklichung einer kürzeren Baulänge ermöglicht.

Zur Lösung dieser Aufgabe ist vorgesehen, daß der Sekundärkolben einer jeweiligen Sekundärstufe von der vom Primärkolben angetriebenen Abtriebsstange axial verschiebbar durchsetzt ist, und daß der Sekundärkolben einer jeweiligen Sekundärstufe eine Kupplungseinrichtung aufweist, durch die der Sekundärkolben unabhängig von der momentanen Axialposition der Abtriebsstange axial unverschieblich lösbar auf der Abtriebsstange festlegbar ist, um die Übertragung einer Antriebskraft vom Sekundärkolben auf die Abtriebsstange zu ermöglichen.

Auf diese Weise kann die axiale Baulänge der Sekundärstufen im Vergleich zur Baulänge der Primärstufe erheblich reduziert werden. Die Sekundärkolben müssen nicht zwingend am gesamten Arbeitshub teilhaben, sondern können nach Bedarf beliebig zugeschaltet werden, wenn die Arbeitsstange bereits - veranlaßt durch die Primärstufe - einen beliebigen Arbeitshub zurückgelegt hat. Es ist somit möglich, die Länge der Sekundärstufen auf das Maß zu begrenzen, das beispielsweise erforderlich ist, um auf eine mit der Abtriebsstange verbundene Schweißelektrode die notwendige Verstellkraft auszuüben, nachdem sie zuvor unter Vermittlung der Primärstufe zur Anlage an einem Werkstück gebracht wurde. Das Zuschalten der vorhandenen Sekundärstufen kann hierbei völlig unabhängig von der momentanen Hubstellung der Abtriebsstange erfolgen, so daß äußerst flexible Einsatzmöglichkeiten gegeben sind. Ein Zuschalten ist stufenlos innerhalb der gesamten maximalen Hubstrecke der Abtriebsstange möglich, die durch den Primärzylinder zur Verfügung gestellt wird und ist nicht auf einen Endabschnitt dieser Hubstrecke beschränkt.

Die mehrstufige Arbeitszylinderanordnung läßt sich beispielsweise als Punktschweiß-Zylinder, als Spannvorrichtung, zum Verschweißen von Verpackungsfolien oder zum Herstellen von Nietverbindungen einsetzen, alles Anwendungen, bei denen zunächst ein Arbeitshub mit geringer Kraft und unter Umständen hoher Geschwindigkeit und anschließend eine weitere Betriebsphase mit hoher Kraft und geringer Hubgeschwindigkeit erforderlich ist. Die erfindungsgemäße Arbeitszylinderanordnung ermöglicht ein funkenarmes Punktschweißen, ein prallfreies Stempeln, ein schnelles Schweißen von Folien, ein leises Lochen von Blechen, ein energiesparendes Nieten, ein platzsparendes Stanzen, ein dosierbares Ultraschall-Schweißen, sonstige zweistufige oder mehr als zweistufige Kraftanwendungen sowie zeitsparende Eilgang-Schleichgang-Anwendungen.

Der Umschaltpunkt zum Zuschalten der mindestens einen Sekundärstufe läßt sich auf vielfältige Weise flexibel vorgeben. Möglich ist eine Vorgabe von außen, beispielsweise durch den Anschlag der Abtriebsstange bzw. eines von dieser getragenen Bauteils auf einem Werkstück oder zeitabhängig. Denkbar wäre auch eine druckabhängige Zuschaltung in Abhängigkeit von dem in der Primärstufe herrschenden Druck oder eine wegabhängige Zuschaltung in Abhängigkeit von gewissen Hubstellungen des Primärkolbens. Jedenfalls ist der Umschaltpunkt nicht an eine ganz bestimmte Axialposition der Abtriebsstange gekoppelt, wie dies bei dem Arbeitszylinder gemäß EP 0 546 862 B1 der Fall ist.

Vorteilhafte Weiterbildungen der Erfindung sind in den Unteransprüchen aufgeführt.

Vorzugsweise verfügt die Kupplungseinrichtung über mindestens ein und vorzugsweise mehrere über den Umfang der Abtriebsstange verteilt angeordnete Klemmelemente, die zwischen einer Klemmstellung und einer Freigabestellung beweglich sind, wobei sie sich in der Klemmstellung am Sekundärkolben abstützen und gegen den Außenumfang der Abtriebsstange vorgespannt werden, so daß eine lösbare kraftschlüssige Verbindung hergestellt wird. Hierbei empfiehlt sich die Anwendung einer Abtriebsstange mit besonders harter oder gehärterter Oberfläche, um den Verschleiß auf ein Minimum zu reduzieren.

Es ist ferner zweckmäßig, wenn den Klemmelementen an ihrer der Abtriebsstange radial entgegengesetzten Außenseite eine kolbenseitige schräge Abstützfläche gegenüberliegt, die derart angeordnet ist, daß sie sich in Richtung des Rückhubes der Abtriebsstange an diese annähert. Dies ermöglicht eine automatische Zuschaltung einer Sekundärstufe allein durch Druckbeaufschlagung des Sekundärkolbens in Richtung des Ausfahrhubes bei jeder beliebigen Axialposition der Abtriebsstange. Die Beaufaufschlagung des Sekundärkolbens bewirkt eine minimale, kaum merkliche Verlagerung relativ zur Abtriebsstange, so daß die Klemmelemente zwischen der Abstützfläche und der Umfangsfläche der Abtriebsstange verkeilt werden und eine zuverlässige Mitnahmeverbindung hergestellt wird.

Weist die Kupplungseinrichtung ein elastisch nachgiebiges Vorspannglied auf, durch das die Klemmelemente in die Klemmstellung vorgespannt sind, ergibt sich bei Beaufschlagung des Sekundärkolbens eine praktisch verzögerungsfreie Antriebsverbindung mit der Abtriebsstange.

Vorzugsweise ist eine jeweilige Kupplungseinrichtung derart ausgebildet, daß ihre Betriebsstellung von der momentanen Hubposition des Sekundärkolbens relativ zum Gehäuse der zugeordneten Sekundärstufe abhängt. Hierbei kann am Gehäuse der Sekundärstufe und insbesondere an einem stirnseitige Abschlußdeckel derselben ein Löseelement angeordnet sein, das die Kupplungseinrichtung beaufschlagt und in einer Lösestellung hält, wenn sich der Sekundärkolben in einer eingefahrenen Grundstellung befindet. Hier liegt praktisch eine mechanische Entriegelung vor. Der Sekundärkolben wird in der Grundstellung zweckmäßigerweise durch entsprechend gerichtete Fluidbeaufschlagung gehalten. In dieser Grundstellung ist ein ungestörtes axiales Verlagern der Abtriebsstange relativ zum Sekundärkolben möglich.

Zum Zuschalten des Sekundärkolbens bedarf es zum gewünschten Zeitpunkt zweckmäßigerweise lediglich einer Verlagerung des Sekundärkolbens in Richtung des Ausfahrhubes durch entsprechende Fluiddruckbeaufschlagung, so daß die Kupplungseinrichtung außer Eingriff mit dem Löseelement gelangt und automatisch in ihre Kupplungsstellung umschalten kann, in der eine Mitnahmeverbindung zwischen den Sekundärkolben und der Abtriebsstange vorliegt.

Vorzugsweise sind sämtliche Zylinderstufen der Arbeitszylinderanordnung nach Art von doppeltwirkenden Zylindern ausgestattet, die nach Bedarf eine Beaufschlagung des zugeordneten Kolbens in beiden axialen Richtungen ermöglichen.

Über die Anzahl der Sekundärstufen läßt sich die an der Abtriebsstange abgreifbare Antriebskraft nach Bedarf vorgeben. Besonders kompakt baut allerdings eine lediglich zweistufige Arbeitszylinderanordnung mit einer Primärstufe und einer Sekundärstufe. Eine hohe Antriebskraft mit gleichzeitig extremer Lufteinsparung ergibt sich dann, wenn der Sekundärkolben der Sekundärstufe eine wesentlich größere Kolbenfläche aufweist als der Primärkolben der Primärstufe. Hier kann mit einer einen minimalen Durchmesser aufweisenden Primärstufe unter stark reduziertem Luftverbrauch der Arbeitshub im wesentlichen ausgeführt werden, um erst zum Ende des Arbeitshubes eine enorme Kraftverstärkung durch die Sekundärstufe zu realisieren.

Nachfolgend wird die Erfindung anhand der beiliegenden Zeichnung näher erläutert. In dieser zeigen:
- Figur 1: eine erste Bauform einer mehrstufige fluidbetätigten Arbeitszylinderanordnung mit einer Primärstufe und zwei Sekundärstufen im Längsschnitt,
- Figur 2: die das vordere Ende der Arbeitszylinderanordnung aus Figur 1 bildende Sekundärstufe in vergrößerter Darstellung, wobei eine Betriebsphase gezeigt ist, bei der der Sekundärkolben über die Kupplungseinrichtung mit der Abtriebsstange eine Mitnahmeverbindung eingeht,
- Figur 3: eine der Figur 2 entsprechende Darstellung, wobei eine andere Betriebsphase gezeigt ist, bei der der Sekundärkolben seine Grundstellung einnimmt und die Kupplungseinrichtung, verursacht durch ein Löseelement, eine Lösestellung einnimmt, in der die Mitnahmeverbindung zur Abtriebsstange gelöst ist,
- Figur 4: einen bei der Anordnung gemäß Figuren 1 bis 3 verwendeten Sekundärkolben einschließlich der an ihm vorgesehenen Kupplungseinrichtung in expoldierter Einzeldarstellung,
- Figur 5: den in Figur 4 gezeigten Sekundärkolben im zusammengebauten Zustand,
- Figur 6: eine alternative Bauform einer mehrstufigen Arbeitszylinderanordnung, die im Vergleich zu der dreistufigen Ausgestaltung gemäß Figur 1 über eine lediglich zweistufige Ausgestaltung verfügt, wobei allerdings der Aufbau der Kupplungseinrichtung dem in den anderen Figuren abgebildeten entspricht.

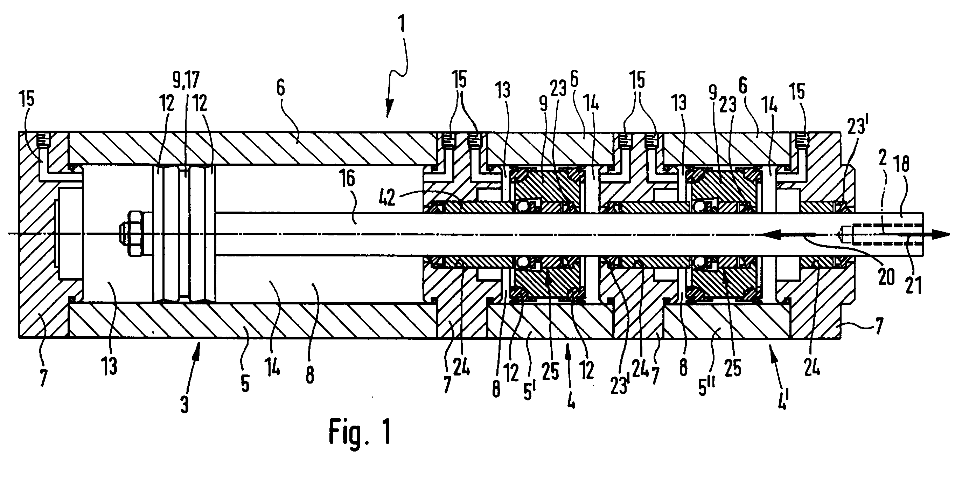

Aus Figur 1 geht eine mehrstufige fluidbetätigte Arbeitszylinderanordnung 1 hervor, die über drei in Axialrichtung 2 aufeinanderfolgend angeordnete Zylinderstufen verfügt. Bei diesen handelt es sich um eine der Rückseite der Anordnung zugeordnete Primärstufe 3 sowie zwei sich zur Vorderseite der Anordnung hin anschließende Sekundärstufen 4, 4'.

Jede Zylinderstufe 3, 4, 4' ist bevorzugt nach Art eines doppeltwirkenden Arbeitszylinders ausgebildet. Jede Zylinderstufe umfaßt ein Gehäuse 5, 5', 5'' mit einem Zylinderrohr 6 und dieses axial beidseits verschießenden Abschlußwänden 7. Die drei Gehäuse 5, 5', 5'' sind in Axialrichtung fest aneinandergesetzt, beispielsweise mittels nicht näher dargestellter Verbindungsschrauben, und bilden gemeinsam ein Vorrichtungsgehäuse der Arbeitszylinderanordnung 1.

Um in Axialrichtung 2 möglichst kompakte Abmessungen zu erzielen, ist zwischen axial unmittelbar benachbarten Zylinderstufen 3, 4, 4' jeweils nur eine einzige Abschlußwand 7 angeordnet, die gleichzeitig als Abschlußwand für beide benachbarte Zylinderstufen dient. Bei der beispielsgemäßen dreistufigen Ausführung sind somit insgesamt vier Abschlußwände vorhanden.

Jedes Gehäuse 5, 5', 5'' definiert einen Zylinderraum 8, in dem ein kolbenartiges Antriebselement 9 axial verschiebbar angeordnet ist. Im Bereich des Außenumfanges der Antriebselemente 9 angeordnete ringförmige Dichtungen 12 arbeiten gleitend mit der Innenumfangsfläche eines jeweiligen Zylinderrohres 6 zusammen, so daß der zugeordnete Zylinderraum 8 jeweils in zwei Arbeitsräume 13, 14 dicht unterteilt wird. In jeden Arbeitsraum 13, 14 mündet ein am Außenumfang des Vorrichtungsgehäuses ausmündender Fluidkanal 15, über den eine gesteuerte Zufuhr und/oder Abfuhr eines fludischen Druckmediums, insbesondere Druckluft in den bzw. aus dem zugeordneten Arbeitsraum 13, 14 möglich ist.

Die Arbeitszylinderanordnung 1 verfügt über eine insbesondere einstückige und vorzugsweise aus Vollmaterial bestehende Abtriebsstange 16. Sie ist einenends an dem Antriebselement 9 der Primärstufe 3 axial unbeweglich festgelegt, das nachfolgend als Primärkolben 17 bezeichnet sei. Ausgehend von dem Primärkolben 17 erstreckt sie sich koaxial in Richtung zur Vorderseite der Arbeitszylinderanordnung, wobei sie die sich an die Primärstufe 3 anschließenden Sekundärstufen 4, 4' koaxial durchsetzt. Ihr an der Vorderseite der Arbeitszylinderanordnung 1 aus dem Vorrichtungsgehäuse herausragendes äußeres Ende 18 ermöglicht die Befestigung eines nicht näher dargestellten, zu bewegenden Bauteils, beispielsweise einer Elektrode eines Punktschweißgerätes. Die Abtriebsstange 16 hat vorzugsweise einen kreisförmigen Querschnitt.

Zumindest derjenige Längenabschnitt der Abtriebsstange 16, der während der durch die Primärstufe 3 vorgegebenen maximalen Hubstrecke eine Sekundärstufe 4, 4' durchsetzen kann, hat einen konstanten Querschnitt. Vorzugsweise verfügt die Abtriebsstange 16 aber über ihre gesamte Baulänge über die gleiche Querschnittsgestaltung.

Durch gesteuerte Zufuhr und/oder Abfuhr von Druckmedium bezüglich den Arbeitsräumen 13, 14 der Primärstufe 3 kann die Abtriebsstange 16 zu einer Axialbewegung veranlaßt werden. Die ausgehend von der vollständig eingefahrenen Position bis zu einer gewünschten ausgefahrenen Position innerhalb der maximal möglichen Hubstrecke stattfindende Bewegung sei als Arbeitshub 21 bezeichnet, die entgegengesetzte Rückbewegung als Rückhub 20. Der Großteil des Arbeitshubes wie auch des Rückhubes ist durch die Primärstufe 3 veranlaßt.

Das Antriebselement 9 einer jeweiligen Sekundärstufe 4, 4' sei als Sekundärkolben 22 bezeichnet. Jeder Sekundärkolben 22 ist von der Abtriebsstange 16 koaxial und axial verschieblich durchsetzt. Zur Gewährleistung einer fluiddichten Abtrennung der beiden Arbeitsräume 13, 14 einer jeweiligen Sekundärstufe 4, 4' trägt ein jeweiliger Sekundärkolben im Bereich der abtriebsstange 16 eine ringförmige Dichtungseinrichtung 23, die die Abtriebsstange 16 unter Abdichtung axial verschieblich koaxial umschließt.

Auch in den von der Abtriebsstange 16 durchsetzten Durchbrechungen 24 der Abschlußwände 7 sind vergleichbare Dichtungseinrichtungen 23' angeordnet.

Die Sekundärstufen 4 dienen dazu, die Stellkraft der Abtriebsstange 16 in Richtung des Ausfahrhubes 25 zu verstärken. Die Sekundärkolben 22 sind der Abtriebsstange 16 bei Bedarf antriebsmäßig zuschaltbar, so daß sie die über den Primärkolben 17 ausgeübte Antriebskraft ergänzen oder ersetzen können.

Die geschilderte Betriebsweise macht man sich beispielsweise dann zunutze, wenn ein durch die Abtriebsstange 16 zu bewegendes Bauteil zunächst mit verhältnismäßig geringer Kraft über eine beliebige Wegstrecke verlagert werden muß, um erst anschließend über eine kurze Wegstrecke eine hohe Kraft auszuüben. Nur während des letzten Endabschnittes des Arbeitshubes treten die Sekundärkolben 22 somit in Wirkung. Dabei ist vorteilhaft, daß die Zuschaltung der Sekundärkolben 22 sehr variabel ist und nicht von der momentanen Axialposition der Abtriebsstange 16 abhängt. Die unterstützende Wirkung der Sekundärkolben 22 kann daher unabhängig davon genutzt werden, ob - beispielsweise bedingt durch die äußeren Gegebenheiten - der innerhalb der maximal möglichen Hubstrecke gewählte Arbeitshub insgesamt sehr lang oder verhältnismäßig kurz ist.

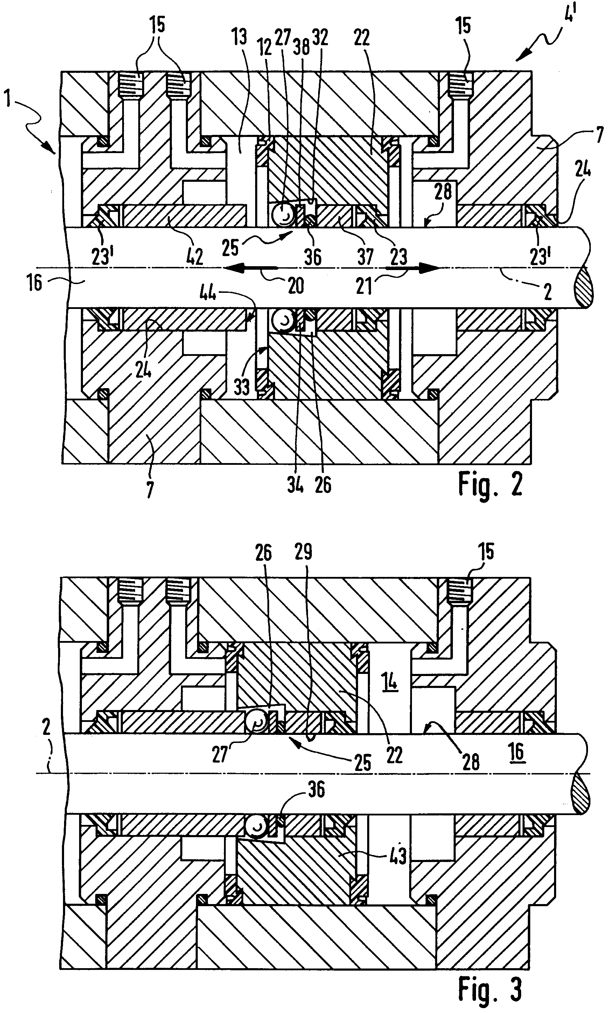

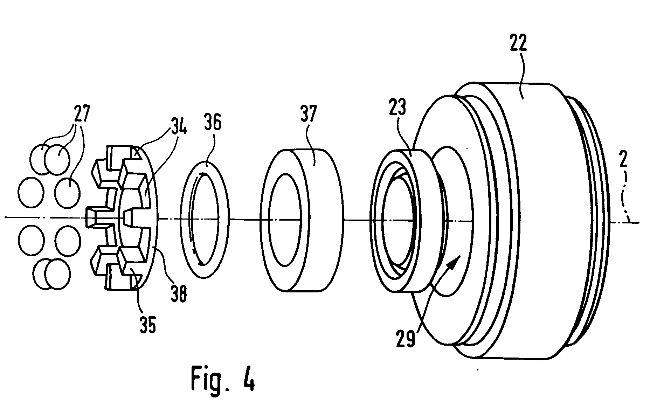

Das Zuschalten der Sekundärkolben 22 geschieht durch das Aktivieren einer an einem jeweiligen Sekundärkolben 22 vorgesehenen Kupplungseinrichtung 25, deren bevorzugter Aufbau sich insbesondere aus Figuren 2 bis 5 ergibt.

Bei deaktivierter Kupplungseinrichtung 25 - in Figur 3 gezeigt und als "Lösestellung" bezeichnet - ist die Abtriebsstange 16 relativ zum Sekundärkolben 22 in Axialrichtung 2 entlang der maximal möglichen Hubstrecke ungehindert verschiebbar. Bei aktivierter Kupplungseinrichtung - in Figur 2 abgebildet und als "Kupplungsstellung" bezeichnet - ist der Sekundärkolben 22 axial unverschieblich auf der Abtriebsstange festgelegt und bildet mit dieser eine nur gemeinsam axial verschiebliche Einheit. In diesem Falle ist der Sekundärkolben 22 in der Lage, in Richtung des Arbeitshubes 21 eine Antriebskraft auf die Abtriebsstange 16 zu übertragen, die von dem in den in Richtung des Rückhubes 20 weisenden Arbeitsraum 13 eingespeisten fluidischen Druckmedium hervorgerufen wird.

Somit kann sich die Herstellung einer lösbaren Mitnahmeverbindung zwischen dem Sekundärkolben 22 und der Abtriebsstange 16 auf diejenige Betriebsphase des Arbeitshubes beschränken, in der eine erhöhte Stellkraft benötigt wird. In der übrigen Betriebsphase, die regelmäßig den Großteil des Arbeitshubes ausmachen wird, kann der Sekundärkolben 22 hingegen von der Abtriebsstange 16 entkoppelt sein. Dies ermöglicht es, die axiale Baulänge der Sekundärstufen sehr gering zu halten und insbesondere wesentlich geringer als diejenige der Primärstufe 3. Es genügt im wesentlichen, die axiale Baulänge des Zylinderraumes einer jeweiligen Sekundärstufe 4, 4' derart zu minimieren, daß die Länge des dem Sekundärkolben 22 zur Verfügung stehenden Hubweges demjenigen entspricht, entlang dessen die Abtriebsstange 16 mit erhöhter Kraft beaufschlagt werden soll.

Beim Ausführungsbeispiel sitzt die Kupplungseinrichtung 25 vorzugsweise im Innern eines jeweiligen Sekundärkolbens 22. Die von der Abtriebsstange 16 axial durchsetzte Durchbrechung 26 des Sekundärkolbens 22 verfügt auf der in Richtung des Rückhubes 22 weisenden Axialseite über einen Abschnitt größeren Querschnittes, so daß sich ein die Abtriebsstange 16 konzentrisch umgebender Aufnahmeraum 26 ergibt. In diesem Aufnahmeraum 26 sind mehrere über den Umfang der Abtriebsstange 16 verteilt angeordnete Klemmelemente 27 aufgenommen, die vorzugsweise als Wälzelemente ausgebildet sind und beim Ausführungsbeispiel von Kugeln gebildet sind. Die Klemmelemente 27 können unmittelbar an der Umfangsfläche 28 der Abtriebsstange 16 anliegen.

Die den Klemmelementen 27 radial außen gegenüberliegende Begrenzungsfläche des Aufnahmeraumes 26 bildet eine ringsumlaufende Abstützfläche 32. Sie hat einen sich in Richtung des Rückhubes 20 schräg nach radial innen verjüngenden konischen Verlauf, so daß sie sich in Richtung des Rückhubes 20 an die Umfangsfläche 28 der Abtriebsstange 16 annähert. Die radiale Breite des zur Kolbenrückseite 33 des Sekundärkolbens 22 offenen Aufnahmeraumes 26 ist geringfügig geringer als der Durchmesser der Klemmelemente 27, so daß diese nicht aus dem Aufnahmeraum 26 herausrutschen können. Mit zunehmender Entfernung von der Kolbenrückseite 33 in Richtung des Arbeitshubes 21 nimmt die radiale Breite des Aufnahmeraums 26 jedoch zu und kann den Durchmesser der Klemmelemente 27 übersteigen.

Um die Klemmelemente 27 relativ zueinander zu fixieren, sind sie in den Zwischenräumen 34 eines ringförmigen Käfigelements 35 gehalten, das in dem Aufnahmeraum 26 aufgenommen ist.

Die Klemmelemente 27 sind in dem Aufnahmeraum 26 zwischen einer aus Figur 2 ersichtlichen Klemmstellung und einer aus Figur 3 ersichtlichen Freigabestellung axial verlagerbar. In der Klemmstellung sind sie zwischen der schrägen Abstützfläche 32 und der Umfangsfläche 28 der Abtriebsstange 16 mit Keilwirkung eingespannt. Durch die kolbenseitige Abstützung wird hierbei eine radiale Klemmkraft auf die Abtriebsstange 16 ausgeübt, so daß eine kraftschlüssige Verbindung zwischen dem Sekundärkolben 22 und der Abtriebsstange 16 vorliegt. In diesem Zustand liegt die Kupplungsstellung der Kupplungseinrichtung 25 vor.

Die Ausübung einer Kraft auf die Klemmelemente 27 in Richtung des Arbeitshubes 21 relativ zum Sekundärkolben 22 verlagert sie in die Freigabestellung. Aufgrund des größeren radialen Spielraumes mangelt es hierbei an einer Klemmwirkung, so daß sich die Abtriebsstange 16 relativ zum Sekundärkolben 22 axial verschieben läßt. In der Freigabestellung der Klemmelemente 27 liegt die Lösestellung der Kupplungseinrichtung 25 vor.

Beim Ausführungsbeispiel sind die Klemmelemente 27 ständig in Richtung ihrer Klemmstellung vorgespannt. Zu diesem Zweck verfügt die Kupplungseinrichtung 25 über ein elastisch nachgiebiges Vorspannglied 36, das axial zwischen dem Sekundärkolben 22 und den Klemmelementen 27 wirkt. Beispielsgemäß ist es von einem Ringkörper aus Material mit gummieelastischen Eigenschaften gebildet und ist koaxial zu der Abtriebsstange 16 angeordnet, wobei es axial zwischen den Klemmelementen 27 und einer kolbenfesten Stützwand 37 angeordnet ist, die sich im Bereich des inneren Endes des Aufnahmeraumes 26 befindet. Um eine gleichmäßige Kraftübertragung zu gewährleisten, ist zwischen das ringförmige Vorspannglied 36 und den Ring aus Klemmelementen 27 eine Übertragunggscheibe 38 angeordnet, die vorzugsweise Bestandteil des Käfigelements 35 ist. Die Stützwand kann von einem in die Durchbrechung eingesetzten Ringelement gebildet sein.

Vorzugsweise ist einer jeweiligen Kupplungseinrichtung 25 ein Löseelement 42 zugeordnet. Das Löseelement 42 ist am Gehäuse 5', 5'' der betreffenden Sekundärstufe 4, 4' festgelegt, und zwar bevorzugt an derjenigen Abschlußwand 7, an der der Sekundärkolben 22 anliegt, wenn er weitestmöglich in Rückhubrichtung 20 verlagert ist. Die hierbei vom Sekundärkolben 22 eingenommene Stellung sei als Grundstellung 43 bezeichnet, sie ist in Figur 3 gezeigt.

Das Löseelement 42 ist derart ausgebildet und angeordnet, daß es auf die Klemmelemente 27 einwirkt und diese in ihre Freigabestellung verlagert und hält, wenn der Sekundärkolben 22 im Rahmen einer in Rückhubrichtung erfolgenden Bewegung in die Nähe der Grundstellung 43 gelangt und diese schließlich erreicht.

Das beispielsgemäße Löseelement 42 ist hülsenartig ausgebildet und umschließt die Abtriebsstange 16 koxial, wobei es vorteilhafterweise gleichzeitig eine Führungsbuchse für die verschiebliche Abtriebsstange 16 bildet. Das buchsenähnliche Löseelement 42 ragt axial in den angrenzenden Arbeitsraum 13 der betreffenden Sekundärstufe 4, 4' hinein. Seine Stirnfläche 44 liegt hierbei den Klemmelementen 27 axial gegenüber.

Aufgrund der geschilderten Ausgestaltung ist erreicht, daß die momentane Betriebsstellung der Kupplungseinrichtung 25 von der aktuellen Hubposition des Sekundärkolbens 22 abhängig ist, die dieser relativ zum Gehäuse 5', 5'' der Sekundärstufe 4, 4' einnimmt. Weiterhin ist die Betriebsstellung von der momentanen Hubrichtung und der Relativgeschwindigkeit zwischen dem Sekundärkolben 22 und der Abtriebsstange 16 abhängig. Daraus resultiert eine besonders einfache Betriebsweise der Sekundärstufen 4, 4'.

Zur Aktivierung und Deaktivierung der Kupplungseinrichtungen ist zweckmäßigerweise eine nicht näher dargestellte Steuereinrichtung vorgesehen, die über geeignete Sensoren verfügen kann. So kann die Betätigung beispielsweise in Abhängigkeit von bestimmten Stellungen der Abtriebsstange 16 oder des Primärkolbens 17 erfolgen oder in Abhängigkeit von dem in einem der Arbeitsräume 13, 14 der Primärstufe 3 herrschenden Druck. Hier sind vielfältige Steuerungsvarianten denkbar.

Eine bevorzugte Betriebsweise der Arbeitszylinderanordnung 1 ist folgende:

Ausgehend von der vollständig eingefahrenen Stellung wird die Abtriebsstange 16 durch Betätigung der Primärstufe 3 zu einer Bewegung in Richtung des Arbeitshubes 21 veranlaßt. Solange hierbei eine Kraftverstärkung nicht erforderlich ist, werden die Sekundärkolben 22 durch Druckbeaufschlagung der in Arbeitsrichtung weisenden Arbeitsräume 14 in die Grundstellung gedrückt und in dieser gehalten. In den Arbeitsräumen 14 könnte auch eine Federanordnung vorgesehen sein, die die Sekundärkolben anstelle einer fluidischen Druckbeaufschlagung in die Grundstellung vorspannt. Dies hat zur Folge, daß die Kupplungseinrichtungen 25 die aus Figur 3 hervorgehende Lösestellung einnehmen, da die Klemmelemente 27 von dem Löseelement 42 entgegen der Stellkraft des Vorspanngliedes 36 in der Freigabestellung gehalten werden. Da die Abtriebsstange über einen durchgehend konstanten Querschnitt verfügt, lässt sie sich nun beliebig weit axial verschieben, ohne von den Sekundärkolben gestoppt zu werden.

Erreicht die Abtriebsstange 16 im Rahmen des Arbeitshubes eine Position, an der eine Erhöhung der Stellkraft erforderlich ist, wird unter gleichzeitiger Entlüftung der vorgenannten Arbeitsräume 14 Druckmedium in die der jeweiligen Kolbenrückseite 33 zugeordneten Arbeitsräume 13 eingespeist. Dies führt zu einer Verlagerung der Sekundärkolben 22 in Richtung des Axialhubes 21, wobei nach kurzer Wegstrecke die Klemmelemente 27 außer Eingriff von dem Löseelement 42 gelangen. Dabei sorgt das Vorspannglied 36 gleichzeitig für eine verzögerungslose Annäherung der Klemmelemente 27 an die Abstützfläche 32 und somit für ein Verlagern in die Klemmstellung. Dadurch und bedingt durch die gleichzeitige weitere Verlagerung des Sekundärkolbens 22 mit einer im Vergleich zur Abtriebsstange 16 höheren Geschwindigkeit werden die Klemmelemente 27 zwischen der Abstützfläche 32 und der Umfangssfläche 28 verkeilt bzw. verklemmt, so daß die gewünschte Mitnahmeverbindung zwischen dem Sekundärkolben 22 und der Abtriebsstange 16 vorliegt. Bei weiterhin aufrechterhaltenem Druck im Arbeitsraum 13 wirkt nun der Sekundärkolben 22 als Antriebselement 9, das eine Stellkraft auf die Abtriebsstange 16 überträgt.

Während des durch die Primärstufe 3 verursachten Rückhubes der Abtriebsstange 16 ist eine Druckbeaufschlagung der Arbeitsräume 13, 14 der Sekundärstufen 4, 4' nicht notwendigerweise erforderlich. Anfänglich wird hierbei ein jeweiliger Sekundärkolben 22 in Folge der vorhandenen Klemmung mitbewegt. Sobald er jedoch auf das Löseelement aufläuft, schaltet die dadurch mechanisch beaufschlagte Kupplungseinrichtung 25 in die Lösestellung um, so daß auch anschließend ein ungehinderter Rückhub der Abtriebsstange 16 möglich ist. Allerdings ist es zweckmäßig, zur Gewährleistung stabiler Verhältnisse Druckmedium während des Rückhubes der Abtriebsstange in die vorderen Arbeitsräume 14 zuzuführen und dadurch die Sekundärkolben 22 in die Grundstellung zu verbringen. Dies erübrigt sich, wenn eine Federeinrichtung vorhanden ist.

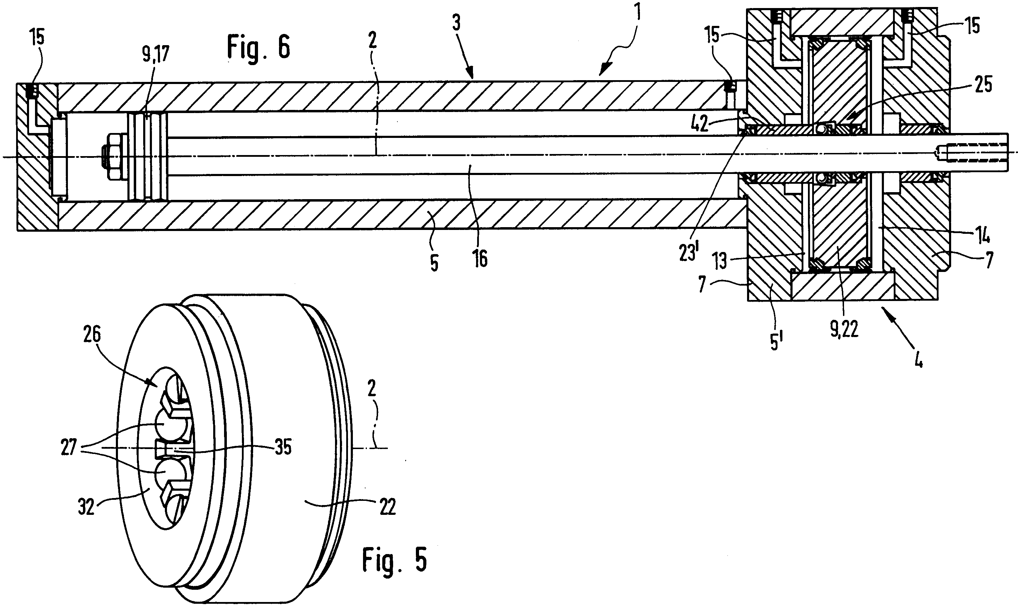

Grundsätzlich kann die Arbeitszylinderanordnung 1 mit einer beliebigen Anzahl von Zylinderstufen ausgestattet sein. Obwohl durchaus mehrere Primärstufen 3 möglich wären, wird regelmäßig nur eine einzige Primärstufe 3 vorgesehen werden. Bei der Anzahl der Sekundärstufen 4, 4' wird man sich an den benötigten Stellkräften orientieren, wobei entsprechend den gegebenen Einsatzbedingungen wahlweise mehrere Sekundärstufen 4, 4' geringeren Durchmessers oder eine geringere Anzahl von Sekundärstufen größeren Durchmessers vorgesehen werden können. In diesem Zusammenhang ist in Figur 6 eine Arbeitszylinder 1 abgebildet, die über eine Primärstufe 3 und eine Sekundärstufe 4 verfügt, wobei die Sekundärstufe 4 einen im Vergleich zur Primärstufe 3 erheblich größeren Durchmesser aufweist. Der einzige Sekundärkolben 22 besitzt eine im Vergleich zum Primärkolben 17 wesentlich größere Kolbenfläche. Gleichzeitig ist die Baulänge der Primärstufe 3 auch im Vergleich zur Bauform gemäß Figur 1 erheblich vergrößert. Die gezeigte Anordnung ermöglicht mit geringstem Fluidbedarf die Verwirklichung großer Arbeitshübe und großer Stellkräfte bei aktivierter Kupplungseinrichtung 25.

Die beispielsgemäße Arbeitszylinderanordnung liese sich beispielsweise als Eilgang-Hochkraft-Zylinder, als Mehrstufen-Kraft-Zylinder oder als Softtouch-Hi-Power-Zylinder bezeichnen.

## Patentansprüche

1. Mehrstufige fluidbetätigte Arbeitszylinderanordnung, mit einer axial verschiebbaren Abtriebsstange (16) und mehreren zur Übertragung einer Antriebskraft mit der Abtriebsstange (16) zusammenwirkenden fluidbeaufschlagbaren Antriebselementen (9), wobei eine im wesentlichen für den Arbeitshub der Abtriebsstange (16) verantwortliche Primärstufe (3) mit einem Primärkolben (17) als Antriebselement (9) und mindestens eine eine Kraftverstärkung ermöglichende Sekundärstufe (4,4') mit einem der Abtriebsstange (16) variabel zuschaltbaren Sekundärkolben (22) als weiteres Antriebselement (9) vorhanden ist, dadurch gekennzeichnet, daß der Sekundärkolben (22) einer jeweiligen Sekundärstufe (4,4') von der vom Primärkolben (17) angetriebenen Abtriebsstange (16) axial verschiebbar durchsetzt ist, und daß der Sekundärkolben (22) einer jeweiligen Sekundärstufe (4,4') eine Kupplungseinrichtung (25) aufweist, durch die der Sekundärkolben (22) unabhängig von der momentanen Axialposition der Abtriebsstange (16) axial unverschieblich lösbar auf der Abtriebsstange (16) festlegbar ist, um die Übertragung einer Antriebskraft vom Sekundärkolben (22) auf die Abtriebsstange (16) zu ermöglichen.

2. Arbeitszylinderanordnung nach Anspruch 1, dadurch gekennzeichnet, daß die Kupplungseinrichtung (25) mindestens ein im Bereich des Außenumfanges der Abtriebsstange (16) angeordnetes, zwischen einer Klemmstellung und einer Freigabestellung bewegliches Klemmelement (27) aufweist, das sich in der Klemmstellung am Sekundärkolben (22) abstützt und gegen den Außenumfang (28) der Abtriebsstange (16) gedrückt wird.

3. Arbeitszylinderanordnung nach Anspruch 2, dadurch gekennzeichnet, daß die Kupplungseinrichtung (25) mehrere über den Umfang der Abtriebsstange (16) verteilt angeordnete, insbesondere als Wälzelemente ausgebildete Klemmelemente (27) aufweist.

4. Arbeitszylinderanordnung nach Anspruch 2 oder 3, dadurch gekennzeichnet, daß die Klemmelemente (27) an ihrer der Abtriebsstange (16) radial entgegengesetzten Außenseite von einer am Sekundärkolben (22) vorgesehenen schrägen Abstützfläche (32) flankiert sind, die sich in Richtung des dem Arbeitshub (21) entgegengesetzten Rückhubes (20) radial an die Abtriebsstange (16) annähert, so daß die Klemmelemente (27) bei in Richtung des Arbeitshubes (21) erfolgender Bewegung des Sekundärkolbens (22) zwischen der Abstützfläche (32) und der Abtriebsstange (16) unter Einnahme der Kupplungsstellung eingeklemmt werden.

5. Arbeitszylinderanordnung nach einem der Ansprüche 2 bis 4, dadurch gekennzeichnet, daß die Kupplungseinrichtung (25) ein elastisch nachgiebiges Vorspannglied (36) aufweist, durch das die Klemmelemente (27) in die Klemmstellung vorgespannt sind.

6. Arbeitszylinderanordnung nach einem der Ansprüche 1 bis 5, dadurch gekennzeichnet, daß die Kupplungseinrichtung (25) derart ausgebildet ist, daß ihre Betriebsstellung von der momentanen Hubposition des Sekundärkolbens (22) relativ zum Gehäuse (5',5'') der zugeordneten Sekundärstufe (4,4') abhängt.

7. Arbeitszylinderanordnung nach einem der Ansprüche 1 bis 6, dadurch gekennzeichnet, daß am Gehäuse (5',5'') der Sekundärstufe (4,4') ein Löseelement (42) angeordnet ist, das in der in Rückhubrichtung (20) verlagerten Grundstellung (43) des Sekundärkolbens (22) auf die Kupplungseinrichtung (25) einwirkt und diese in einer Lösestellung hält, in der die Mitnahmeverbindung zwischen dem Sekundärkolben (22) und der Abtriebsstange (16) gelöst ist.

8. Arbeitszylinderanordnung nach Anspruch 7, dadurch gekennzeichnet, daß das Löseelement (42) nach einer gewissen, ausgehend von der Grundstellung in Richtung des Arbeitshubes (21) erfolgenden Verlagerung des Sekundärkolbens (22) außer Eingriff mit der Kupplungseinrichtung (25) gelangt, so daß diese eine Kupplungsstellung einnimmt, in der die Mitnahmeverbindung zwischen dem Sekundärkolben (22) und der Abtriebsstange (16) hergestellt ist.

9. Arbeitszylinderanordnung nach Anspruch 7 oder 8, dadurch gekennzeichnet, daß das Löseelement (42) mit den Klemmelementen (27) zusammenwirkt, die in der Lösestellung der Kupplungseinrichtung ihre Freigabestellung und in der Kupplungsstellung der Kupplungseinrichtung ihre Klemmstellung einnehmen.

10. Arbeitszylinderanordnung nach einem der Ansprüche 7 bis 9, dadurch gekennzeichnet, daß das Löseelement (42) von einem an einer axialen Abschlußwand (7) der Sekundärstufe (4,4') angeordneten, die Abtriebsstange (16) koaxial umgebenden hülsenartigen Bauteil gebildet ist, das in den den Sekundärkolben (22) aufnehmenden Zylinderraum (8) der Sekundärstufe (4,4') axial hineinragt.

11. Arbeitszylinderanordnung nach einem der Ansprüche 1 bis 10, dadurch gekennzeichnet, daß der Primärkolben (17) axial unbeweglich an der Abtriebsstange (16) festgelegt ist, die die sich axial an die Primärstufe (3) anschließende mindestens eine Sekundärstufe (4,4') und deren Sekundärkolben (22) mit einem unabhängig von ihrer Axialposition konstanten Querschnitt aufweisenden Längenabschnitt durchsetzt.

12. Arbeitszylinderanordnung nach einem der Ansprüche 1 bis 11, dadurch gekennzeichnet, daß die Primärstufe (3) und eine jeweilige Sekundärstufe (4,4') jeweils nach Art doppelt wirkender Zylinder ausgebildet sind, wobei das jeweilige Antriebselement (9) den es aufnehmenden Zylinderraum (8) unter Abdichtung in zwei fluidbeaufschlagbare Arbeitsräume (13,14) unterteilt.

13. Arbeitszylinderanordnung nach einem der Ansprüche 1 bis 12, dadurch gekennzeichnet, daß ein jeweiliger Sekundärkolben (22) eine die Abtriebsstange (16) koaxial umschließende Dichtungseinrichtung (23) trägt.

14. Arbeitszylinderanordnung nach einem der Ansprüche 1 bis 13, dadurch gekennzeichnet, daß mindestens zwei Sekundärstufen (4,4') vorhanden sind.

15. Arbeitszylinderanordnung nach einem der Ansprüche 1 bis 14, dadurch gekennzeichnet, daß der Sekundärkolben (22) der Sekundärstufe (4,4') eine wesentlich größere Kolbenfläche aufweist als der Primärkolben (17) der Primärstufe (3).

16. Arbeitszylinderanordnung nach einem der Ansprüche 1 bis 15, dadurch gekennzeichnet, daß der einem jeweiligen Sekundärkolben (22) zur Verfügung stehende Hub erheblich geringer ist als derjenige des Primärkolbens (17).
